# EUROPÄISCHE PATENTSCHRIFT

(11) **EP 0 995 476 B1**
(45) Veröffentlichungstag und Bekanntmachung des Hinweises auf die Patenterteilung: **22.12.2004**
(21) Anmeldenummer: 99119579.3
(22) Anmeldetag: 02.10.1999
(51) Int. Cl.: B01D 39/00, B01D 17/04

(54) **Filter zum Abscheiden von Flüssigkeiten aus Gasen**
Filter for the separation of liquids from gases
Filtre de séparation des liquides contenues dans dans de gaz

(30) Priorität: 16.10.1998 DE 29818485 U
(43) Veröffentlichungstag der Anmeldung: 26.04.2000
(73) Patentinhaber: Mann + Hummel GmbH, 71638 Ludwigsburg (DE)
(72) Erfinder: Görg, Günter, 71696 Möglingen (DE)
(74) Vertreter: Voth, Gerhard, Dipl.-Ing.

(56) Entgegenhaltungen:
- DE-A- 3 128 748

## Beschreibung

Die Erfindung betrifft ein Ölnebelabscheideelement.

Derartige Ölnebelabscheideelemente sind bekannt, z. B. im Einsatz bei Verbrennungskraftmaschinen. Will man derartige Ölnebelabscheideelemente in Verbrennungskraftmaschinen einsetzen, die den neuesten Abgasrichtlinien genügen sollen, so ist daran nachteilig, daß der lediglich durch Umlenkungen realisierte Abscheidegrad nur unzureichend ist. Man könnte nun den zusätzlichen Einsatz eines Vlieses vorsehen, dies würde aber einen unvertretbar hohen Anstieg des Druckverlustes, insbesondere beim Zusetzen des Elementes mit Schmutz bedeuten. Somit wäre ein häufiges Auswechseln des Elementes erforderlich, was unpraktisch und teuer wäre.

Aus der DE 31 28 748 ist ein Mikrofilter für strömungsfähige Medien bekannt, dessen Mikrofiltersubstanz besteht aus textilem Garn, wie beispielsweise Chenillegarn. Dieses Chenillegarn ist auf einem Stützkörper angeordnet. Der Stützkörper besteht aus einem perforierten, hülsenförmigen und starren Element.

Ebenfalls sind gestrickte, aus aktivierten Kohlefasern bestehende Wasserfilter sowie Gestricke aus Keramikfasern für Filteranlagen von Dieselmotoren aus einem Prospekt der Fa. Buck, Bondorf bekannt. Weiter ist der Einsatz texturierter Garne im Bereich der Teppichherstellung aus der Veröffentlichung 75 Jahre Textilforschung, S. 66, des Instituts für Textil- und Verfahrenstechnik, Denkendorf bekannt.

Es ist somit Aufgabe der Erfindung, ein Ölnebelabscheideelement und eine Vorrichtung zum Ölnebelabscheiden der eingangs genannten Art dahingehend zu verbessern, daß eine zuverlässige, flexible, über die Lebensdauer der Einrichtung hinaus funktionierende Vorrichtung zum Ölnebelabscheiden sowie ein Ölnebelabscheideelement geschaffen wird.

Die Aufgabe wird durch die Merkmale des Anspruchs 1 gelöst.

Der wesentliche Vorteil der Erfindung liegt darin, daß Chenillegarne oder Stichelgarne (zerfaserte Garne) eine sehr große Oberfläche aufweisen und durch die offene Struktur, d. h. die nach außen abstehenden Elementfasern, koagulierende Eigenschaften aufweisen. Je nach Anwendungsfall wird Garn mit entsprechenden spezifischen Eigenschaften verwendet. Zur Abscheidung von wässrigen Substanzen bietet sich Garn mit hydrophilen Eigenschaften an, zur Abscheidung öliger Substanzen Garn mit oleophilen Eigenschaften.

In einer vorteilhaften Weiterbildung der Erfindung ist vorgesehen, daß das Material des Abscheideelementes wenigstens einen Grobanteil aufweist. Dieser Grobanteil wirkt als Stützmatrix des Elements und übernimmt gleichzeitig die Abscheide- bzw. Drainagefunktion für z.B. große Ölteilchen.

In einer anderen vorteilhaften Weiterbildung ist vorgesehen, daß das Material des Abscheideelementes wenigstens einen Feinanteil aufweist. Dieser Feinanteil übernimmt die Abscheidung in einem Bereich kleinerer Teilchen.

Eine weitere vorteilhafte Weiterbildung sieht vor, daß der Feinanteil Einzelfasern aufweist. Die Kombination beim Chenillegarn oder Stichelgarn von geringem Filamentdurchmesser und hohem Volumen sorgt für ein gutes Ergebnis bei der Ölabscheidung, im Aerosolbereich, da gerade in Motoren, die den ständig steigenden Anforderungen an die Schadstoffbelastung im Abgas genügen sollen, ein hoher Öl-Abscheidegrad bei geringem Druckverlust und gleichzeitigem Vermeiden des Zusetzens durch Rußpartikel von Bedeutung ist.

In einer weiteren vorteilhaften Weiterbildung ist vorgesehen, daß das Abscheideelement mittels Aufwickeln bzw. Falten insbesondere in kompakte Rohrquerschnittsformen bring bar ist. Durch die Eigenstabilität solcher Wirk- oder Webwaren ist es möglich, die selbsttragenden Eigenschaften solcher Waren zu nutzen, um auf eine weitere Umhüllung zu verzichten.

In einer anderen vorteilhaften Weiterentwicklung der Erfindung ist vorgesehen, daß das Abscheideelement mittels Pressen insbesondere in sehr kompakte Rohrquerschnittsformen bringbar ist. Durch das Pressen der Ware ist eine Reduzierung der äußeren Abmessungen bei gleichzeitiger Erhöhung des spezifischen Oberflächenanteils pro Raumeinheit möglich, was den Abscheidegrad erhöht.

Eine weitere vorteilhafte Weiterbildung der Erfindung sieht vor, daß in einer Vorrichtung zum Ölnebelabscheiden ein Ölnebelabscheideelement verwendbar ist. Dies macht deutlich, daß derartige Ölnebelabscheideelemente universell, z.8. in Rohrquerschnitten etc. universell einsetzbar sind.

In einer anderen vorteilhaften Weiterbildung der Erfindung ist vorgesehen, daß die Vorrichtung zum Ölnebelabscheiden insbesondere im Ansaugtrakt von Verbrennungskraftmaschinen einsetzbar ist. Der Einsatz einer solchen Vorrichtung insbesondere im Ansaugtrakt einer Verbrennungskraftmaschine hat vorbeugenden Charakter hinsichtlich der Emissions- als auch der Verschmutzungssituation innerhalb der Maschine, insbesondere im Hinblick auf die Situation der Lebensdauer der Funktionselemente wie beispielsweise eines Turboladers oder Ölkühlers und ähnlicher Teile.

In der Zeichnung zeigen:
- Figur 1: einen Schnitt durch eine Vorrichtung zum Ölnebelabscheiden
- Figur 2: einen Schnitt durch eine Variante der Figur 1
- Figur 3: eine Vorderansicht der Vorrichtung zum Ölnebelabscheiden gemäß Fig. 1
- Figur 4: eine Vorderansicht der Vorrichtung zum Ölnebelabscheiden gemäß Fig. 2
- Figur 5: ein aufgewickeltes Ölabscheidelement
- Figur 6: eine vergrößerte Darstellung des Ausschnittes X in Fig. 5
- Figur 7a: Darstellung des Chenillegarns 2 aus Fig. 6
- Figur 7b: Darstellung des Stichelgarns 2 aus Fig. 6.

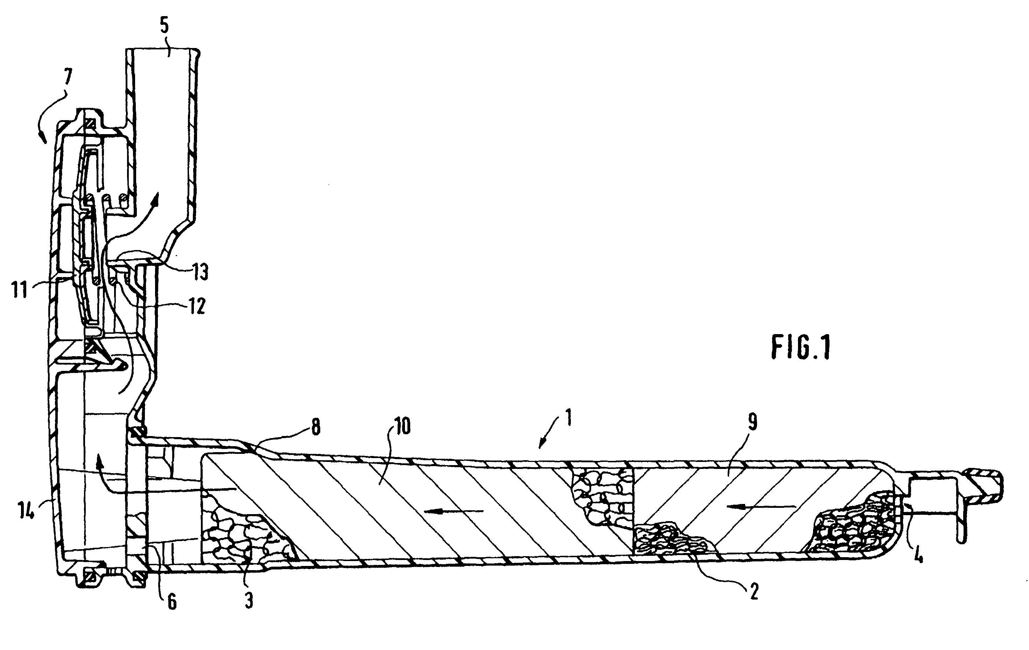

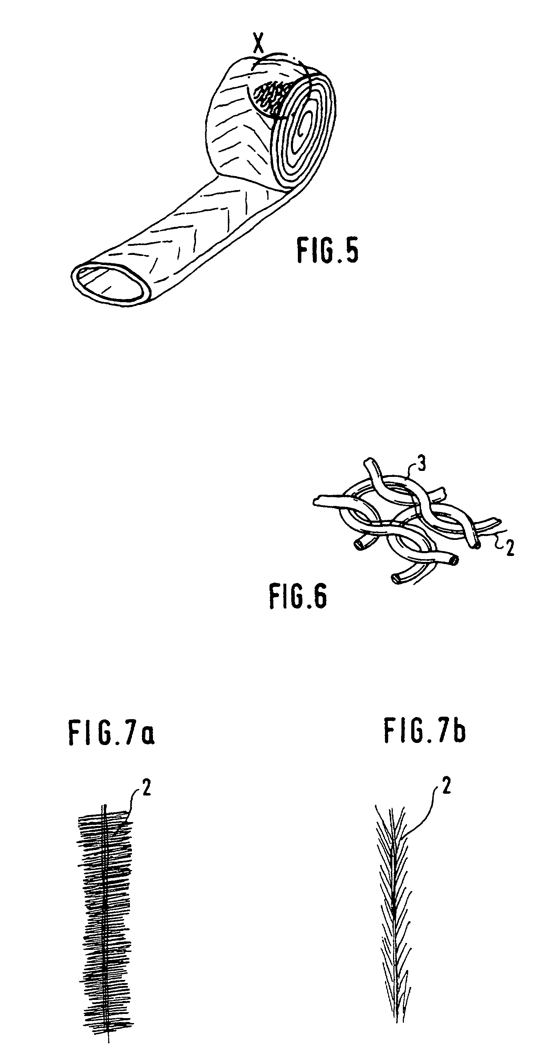

Die Vorrichtung zum Ölnebelabscheiden 1 besteht aus einem Gehäuse 8, das das Ölnebelabscheideelement aufnimmt. Das Gehäuse der Vorrichtung zum Ölnebelabscheiden verfügt über eine Gas-Zuführ- 4 sowie über eine Gasabführöffnung 5. Wie in Figur 1 dargestellt schließt sich an die Gaszuführöffnung ein Ölabscheideelement 9 an, das in diesem Ausführungsbeispiel aus einem Drahtgestrick besteht, das die Stützfunktion des Ölabscheideelements übernimmt. Diesem Drahtgestrick ist, wie in Fig. 6 zu sehen ein feines Chenillegarn 2 (bzw. Stichelgarn) beigegeben, das in diesem Ausführungsbeispiel den Feinanteil 2 darstellt.

Im direkten Anschluß an das beschriebene Ölabscheideelement schließt sich ein weiteres Element an, das lediglich aus einem Drahtgeflecht besteht, das hier einen Grobanteil 3 darstellt und für die Abscheidung größerer Tröpfchen zuständig ist und eine gewisse Drainagefunktion innehat. Im Anschluß an das oder die Ölabscheideelemente 9, 10 weist die Vorrichtung zur Ölnebelabscheidung in ihrem Gehäuse eine Ölrückführöffnung 6 auf, die, nachdem das ölhaltige Gas eine ausreichende Wegstrecke durch die Ölnebelabscheideelemente genommen hat, das abgeschiedene Öl dem Kreislauf der Verbrennungskraftmaschine zurückführt.

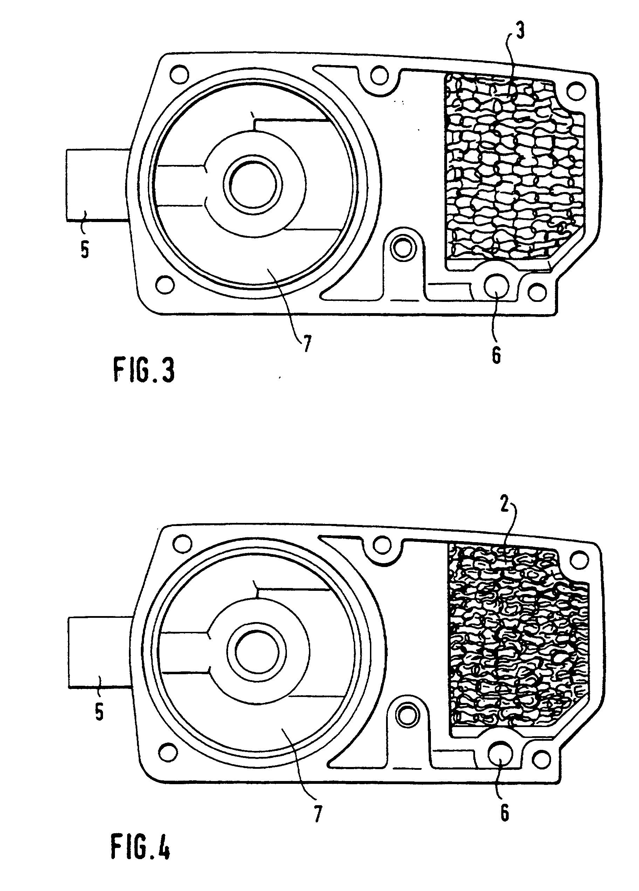

Die Anordnung von Ölrückführungsöffnung 6 wird in Fig. 1 und Fig. 3 dargestellt Zur Beibehaltung definierter Druckverhältnisse im Kurbelgehäuseentlüftungsbereich verfügt die Vorrichtung zur Ölnebelabscheidung 1 über ein Druckregelventil 7.

Das Druckregelventil 7 besteht aus einer Membran 11, die durch eine Druckfeder 12 vorgespannt ist. Sofern ausgangsseitig ein erhöhter Unterdruck herrscht, d. h. an der Gasabführöffnung 5 ein zu hoher Unterdruck anliegt, verschließt die Membran 11 die Öffnung 13 und verhindert ein zu starkes Absaugen der ölhaltigen Gase.

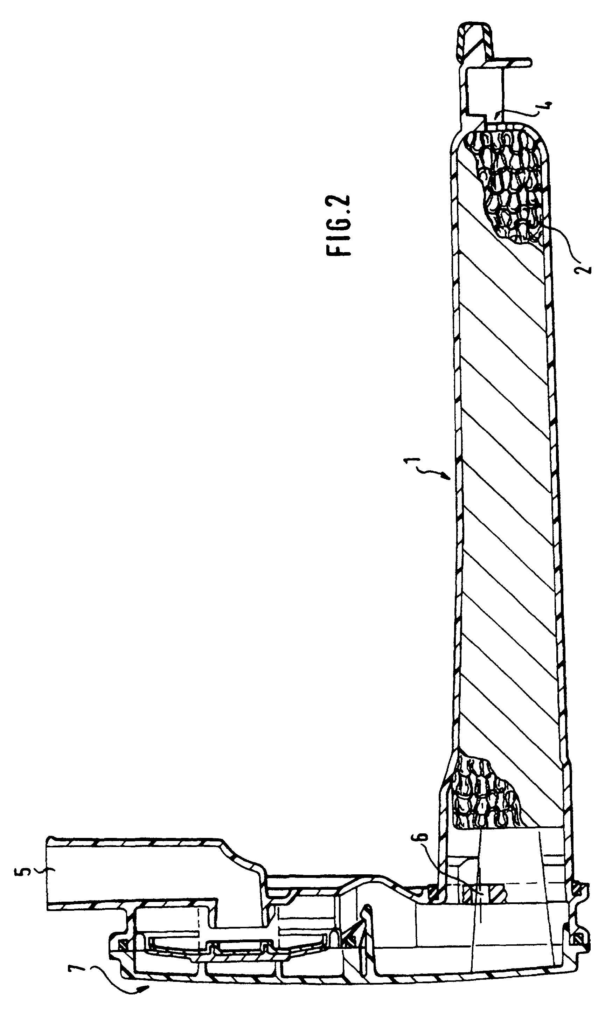

In einem alternativen Ausführungsbeispiel gemäß Fig. 2 besteht die Vorrichtung zum Ölnebelabscheiden 1 aus einem Gehäuse, das das Ölnebelabscheideelement aufnimmt. Das Gehäuse der Vorrichtung zum Ölnebelabscheiden verfügt über eine Gas-Zuführ- 4 sowie über eine Gasabführöffnung 5. Gleiche Teile sind mit gleichen Bezugszeichen versehen.

Wie in Figur 2 dargestellt schließt sich an die Gaszuführöffnung ein Ölabscheideelement an, das in diesem Ausführungsbeispiel aus einem Drahtgestrick besteht, das die Stützfunktion des Ölabscheideelements übernimmt und gleichzeitig den Grobanteil 3 darstellt. Diesem Drahtgestrick ist, wie in Fig. 6 zu sehen ein feines Chenillegarn 2 beigegeben, das in diesem Ausführungsbeispiel den Feinanteil 2 darstellt.

Im Anschluß an das Ölabscheideelement weist die Vorrichtung zur Ölnebelabscheidung in ihrem Gehäuse eine Ölrückführöffnung 6 auf, die, nachdem das ölhaltige Gas eine ausreichende Wegstrecke durch die Ölnebelabscheideelemente genommen hat, das abgeschiedene Öl dem Kreislauf der Verbrennungskraftmaschine zurückführt (Figuren 2 und 4). Auch in dieser Ausführungsform verfügt die Vorrichtung zur Beibehaltung definierter Druckverhältnisse im Kurbelgehäuseentlüftungsbereich über ein Druckregelventil 7.

In einer nicht extra dargestellten Ausführungsform wäre auch ein Ölnebelabscheideelement denkbar, das ausschließlich aus einem selbsttragenden Feinanteil 2 besteht.

Die Figuren 3 und 4 zeigen Seitenansichten des Ölnebelabscheiders bei entferntem Deckel 14, wobei die Trägerstruktur des Druckregelventils 7 erkennbar ist sowie die Ölrückführung 6. Figur 3 zeigt in Seitenansicht das geöffnete Ölnebelabscheideelement gemäß Figur 1, Figur 4 zeigt in der Seitenansicht das geöffnete Ölnebelabscheideelement der Figur 2.

In Figur 5 wird ein aufgewickeltes Ölnebelabscheidelement dargestellt, welches z.B. in dieser kompakten Form in beispielsweise Rohrquerschnitte von Kurbelgehäuseentlüftungen einsetzbar ist. In nicht dargestellter Weise ist ebenfalls denkbar, das Ölnebelabscheideelement zu falten, um es so in die ähnlich kompakte Form zu bringen, wie dies in Figur 5 dargestellt ist. In einer alternativen Ausgestaltung, die nicht dargestellt ist, ist das gefaltete oder das in Figur 5 dargestellte Ölnebelabscheideelement zusätzlich in einer Presse zu verdichten, um auf diese Weise noch kompaktere Ölnebelabscheideelemente zu erzeugen, die dann in Rohrquerschnitte von Kurbelgehäuseentlüftungen verbringbar sind.

Das in der Figur 5 angedeutete Detail X wird in der Figur 6 vergrößert dargestellt. In dieser Darstellung kann man erkennen, daß das Ölnebelabscheideelement sich aus einem Grobanteil 3, der in dieser spezifischen Anwendung aus Draht besteht und einem Feinanteil 2, der hier als, wie in der Figur 7a dargestellt, Chenillegam auftritt, zusammensetzt. In einer alternativen Ausführungsform verfügt das im Feinanteil enthaltene Material über elektrostatische Eigenschaften. In einer weiteren Ausgestaltung verhält sich das Material des Feinanteils 2 in einer Variante hydrophil, in einer weiteren Variante hydrophob. In Figur 7 läßt sich erkennen, wie das sehr elastische Garn ein großes Volumen aufweist, was bei der Feinheit des Garnes zu einer erhöhten Abscheideleistung im ölhaltigen Gasstrom führt. Anstelle der Verwendung von Chenillegarn kann auch das in Figur 7b dargestellte Stichelgarn 2 zur Ölabscheidung genutzt werden.

## Patentansprüche

1. Einrichtung zum Abscheiden von Flüssigkeiten aus Gasen, bestehend aus einem Gehäuse mit einer Öffnung zum Eintritt der flüssigkeitsbelasteten Gase und einer Öffnung zum Rückführen der ausgeschiedenen Flüssigkeit und einer Öffnung zum Ableiten der Gase, wobei in dem Gehäuse wenigstens ein Abscheideelement vorgesehen ist, welches aus einem Drahtgestrick besteht, das eine Stützfunktion des Abscheideelements übernimmt und wobei diesem Drahtgestrick ein Chenillegarn und/oder Stichelgarn beigegeben ist das das Material des Abscheideelements bildet.

2. Einrichtung nach Anspruch 1, **dadurch gekennzeichnet, daß** das Material des Abscheideelements wenigstens einen Grobanteil (3) aufweist.

3. Abscheideelement nach Anspruch 1 oder 2, **dadurch gekennzeichnet, daß** das Material des Abscheideelements wenigstens einen Feinanteil (2) aufweist.

4. Einrichtung nach Anspruch 3, **dadurch gekennzeichnet, daß** der Feinanteil Einzelfasem aufweist, die kleiner als 10 µm sind.

5. Einrichtung nach einem der vorherigen Ansprüche, **dadurch gekennzeichnet, daß** das Abscheideelement mittels Aufwickeln bzw. Falten im Gehäuse angeordnet ist.

6. Einrichtung nach einem oder mehreren der vorherigen Ansprüche, **dadurch gekennzeichnet, daß** diese im Ansaugtrakt von Verbrennungskraftmaschinen eingesetzt ist.

## Claims

1. Device for separating liquids from gases, said device comprising a housing with an opening for the inlet of gases contaminated with liquids and an opening for returning the separated liquid and an opening for discharging the gases, wherein at least one separating element is provided in the housing, which separating element comprises a knitted wire fabric, which assumes a supporting function for the separating element and wherein a chenille yarn and/or an embroidery yam is added to this knitted wire fabric and this forms the material of the separating element.

2. Device according to claim 1, **characterised in that** the material of the separating element includes at least one coarse part (3).

3. Device according to claim 1 or 2, **characterised in that** the material of the separating element includes at least one fine part (2).

4. Device according to claim 3, **characterised in that** the fine part includes individual fibres, which are smaller than 10 µm.

5. Device according to one of the previous claims, **characterised in that** the separating element is disposed in the housing by means of winding or respectively folding.

6. Device according to one or more of the previous claims, **characterised in that** said device is inserted in the intake duct of internal combustion engines.

## Revendications

1. Dispositif pour la séparation de liquides contenus dans des gaz, se composant d'une enceinte avec une ouverture pour l'entrée des gaz chargés de liquide et une ouverture pour le retour du liquide séparé et une ouverture pour l'évacuation des gaz,
dans lequel
l'enceinte comporte au moins un élément de séparation composé d'un tricot de fil qui assure une fonction de support de l'élément de séparation, et un fil de chenille et/ou un fil de jarre est ajouté à ce tricot de fil pour former la matière de l'élément de séparation.

2. Dispositif selon la revendication 1,
**caractérisé en ce que**
la matière de l'élément de séparation comporte au moins une partie grossière (3).

3. Dispositif selon la revendication 1 ou 2,
**caractérisé en ce que**
la matière de l'élément de séparation comporte au moins une partie fine (2).

4. Dispositif selon la revendication 3,
**caractérisé en ce que**
la partie fine présente des fibres individuelles, inférieures à 10 µm.

5. Dispositif selon l'une quelconque des revendications précédentes,
**caractérisé en ce que**
l'élément de séparation est disposé dans l'enceinte par enroulement ou par pliage.

6. Dispositif selon l'une quelconque des revendications précédentes,
**caractérisé en ce que**
celui-ci est installé dans la ligne d'aspiration de moteurs à combustion interne.
